# EUROPEAN PATENT SPECIFICATION

(11) **EP 4 289 646 B1**
(45) Date of publication and mention of the grant of the patent: **16.07.2025**
(21) Application number: 21940176.7
(22) Date of filing: 20.05.2021
(51) Int. Cl.: B60H 1/34

(54) **AIR CONDITIONER VENT, AIR CONDITIONING SYSTEM, AND VEHICLE**
LUFTAUSTRÖMER FÜR EINE KLIMAANLAGE, KLIMATISIERUNGSSYSTEM UND FAHRZEUG
ÉVENT DE CLIMATISATION, SYSTÈME DE CLIMATISATION, ET VÉHICULE

(43) Date of publication of application: 13.12.2023
(73) Proprietor: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: GAN, Chengli, Hangzhou Bay New District Ningbo, Zhejiang 315336 (CN); SUN, Zhiqiang, Hangzhou Bay New District Ningbo, Zhejiang 315336 (CN); CHEN, Qiliang, Hangzhou Bay New District Ningbo, Zhejiang 315336 (CN); ZHOU, Lan, Hangzhou Bay New District Ningbo, Zhejiang 315336 (CN); DU, Xiaoyang, Hangzhou Bay New District Ningbo, Zhejiang 315336 (CN)
(74) Representative: Range, Christopher William
(86) International application number: PCT/CN2021/094926
(87) International publication number: WO 2022/241722

(56) References cited:
- EP-A1- 3 647 092
- WO-A1-2012/077386
- CN-U- 205 439 891
- CN-U- 205 439 891
- CN-U- 206 094 482
- CN-U- 207 328 053
- CN-U- 207 683 281
- CN-U- 212 171 879
- JP-A- 2003 161 508
- JP-A- 2007 168 558
- KR-B1- 101 977 217
- US-A1- 2006 157 618
- US-A1- 2019 202 271

## Description

### FIELD

The present invention relates to an air conditioner vent, an air conditioning system, and a vehicle.

### BACKGROUND

With the increasingly fierce competition in the automotive industry, vehicle cost has become a critical factor for survival in intense competition. A vehicle-mounted air conditioner is one of vital components of a vehicle. The vehicle-mounted air conditioner blows cold air or warm air into the vehicle through an air conditioner vent mounted in a passenger compartment, to adjust an in-vehicle temperature. Whether the design of the air conditioner vent of the vehicle is reasonable or not affects a use effect of an in-vehicle air conditioner. To satisfy comfort requirements in the passenger compartment of the vehicle in different usage scenarios, most blowing-face air vents of the air conditioner of the current vehicle have airflow direction adjustment functions.

At present, the air conditioner vent designed in the automobile is mostly exposed, and is usually composed of a panel, a housing, an upper-layer blade, a lower-layer blade, a dial wheel, a ventilation door, a toggle, a drive connection rod, and the like. With a large number of parts and a complex drive structure, development costs are high, and the period is long. In recent years, some vehicles adopt a hidden air conditioner vent usually composed of an outer housing, an inner housing, an upper air guide blade, a lower air guide blade, a left air guide blade group, a right air guide blade group, a swing frame, a control mechanism, and the like. The control mechanism generally includes a support, a matching rod, a sliding groove, and other components within the inner housing. The structure is extremely complex and has strict requirements on the space structure, which greatly limits the degree of freedom in design.

CN205439891U discloses an air outlet device of air conditioner of automobile, including casing, driving gear, drive gear, operating mechanism, anterior blade and rear portion blading mechanism. JP2007168558A discloses a register which can reduce draft resistance and a pressure loss in an un-deflected state even when all of the air to be blown out from a blowout port can be deflected. US2019202271A1 discloses an air outlet for controlling airflow in a vehicle, including a housing having an air inlet and an air outlet, with first and second walls between the air inlet and the air outlet wherein the first wall is spaced from the second wall, an airfoil located within the housing, and a handle moveably mounted to the airfoil by a coupling. EP3647092A1 discloses an adjustment mechanism for an air vent, comprising one or more adjustable first vanes having a main extension in a first direction, one or more adjustable second vanes having a main extension in a second direction being angled to the first direction, a shaft extending in the first direction and being rotatable around its length axis, a slider being movably attached to the shaft, and a rack.

### SUMMARY

The technical problem to be solved by the present invention is the problem of high parts count, complicated structure, and expensive costs of an existing air conditioner vent.

To solve the above technical problem, in a first aspect, an embodiment of the present invention discloses an air conditioner vent, including: a housing; a first blade group including at least one first air guide blade, the at least one first air guide blade has a first side edge and a second side edge that are opposite to each other, the first side edge and the second side edge are hinged to the housing, respectively; a second blade group including at least one second air guide blade, the at least one second air guide blade has a first end and a second end that are opposite to each other, the first end and the second end are hinged to the housing, respectively; and an air direction adjustment assembly including a toggle. The toggle includes a first connection portion connected to a corresponding one of the at least one first air guide blade and a second connection portion connected to the at least one second air guide blade through a gear mechanism. The housing includes a first housing and a second housing. The first housing and the second housing enclose together to define an accommodation cavity, and the first blade group and the second blade group are disposed in the accommodation cavity. The housing further includes a blade support, and the blade support including a first transverse frame, a second transverse frame, and a connection rod. The connection rod having two ends connected to the first transverse frame and the second transverse frame, respectively. The first end of the at least one second air guide blade is hinged to the first transverse frame, and the second end of the at least one second air guide blade is hinged to the second transverse frame. A shift fork is disposed at the first connection portion. The shift fork is engaged on the corresponding first air guide blade. The second connection portion is of an annular structure. The annular structure is sleeved on the at least one second air guide blade and the connection rod.

Further, the first blade group includes a plurality of first air guide blades connected together through a connection rod and integrally movable.

Further, the connection rod has an engagement groove; and the air direction adjustment assembly further includes a gear shaft rotatably disposed in the engagement groove.

Further, teeth are provided on a side edge of the at least one second air guide blade (301) close to the connection rod. The teeth are in meshing connection with the gear shaft.

Further, a rotary shaft is disposed at an inner side wall of the annular structure. The rotary shaft is hinged to a gear shaft of the air direction adjustment assembly.

Further, an avoidance structure is formed at a part of the at least one second air guide blade close to the first connection portion.

Further, the housing has an air vent, the first blade group and the second blade group are laminated to each other relative to the air vent, and the second blade group is disposed between the first blade group and the air vent.

Further, the at least one second air guide blade is perpendicular to the at least one first air guide blade.

Further, an avoidance structure is formed at an end portion of the at least one first air guide blade close to the at least one second air guide blade.

Further, a first mounting post is disposed at each of the first side edge and the second side edge of the at least one first air guide blade. The first mounting post is hinged to the housing; and/or a second mounting post is disposed at each of the first end and the second end of the at least one second air guide blade. The second mounting post is hinged to the housing.

In a second aspect, an embodiment of the present invention discloses an air conditioning system, including the air conditioner vent as described above.

In a third aspect, an embodiment of the present invention discloses a vehicle, including the air conditioning system as described above.

By adopting the above-mentioned technical solution, the air conditioner vent, the air conditioning system, and the vehicle according to an embodiment of the present invention have the following beneficial effects.

The overall structure of the air conditioner vent mainly includes parts such as the housing, the first blade group, the second blade group, and the air direction adjustment assembly, and is directly connected to the first air guide blade and the second air guide blade by using the toggle. The toggle drives the first blade group and the second blade group by means of rotational motion. Therefore, air direction adjustment is realized. This structure, with a small number of parts, simple design, and low spatial arrangement requirements, greatly simplifies the structure of the air conditioner vent, resulting in development cost savings and a decreasing development cycle.

### BRIEF DESCRIPTION OF THE DRAWINGS

In order to clearly explain technical solutions of the embodiments of the present invention or in the related art, accompanying drawings used in the description of the embodiments or the related art are briefly described below. Obviously, the accompanying drawings as described below are merely some embodiments of the present invention. Based on structures illustrated in these drawings, other accompanying drawings may be obtained by those of ordinary skill in the art without creative effort.
FIG. 1 is a schematic structural diagram of an air conditioner vent according to an embodiment of the present invention.
FIG. 2 is a schematic structural diagram of an air conditioner vent according to an embodiment of the present invention.
FIG. 3 is a schematic diagram of a mounting structure of a first blade group of an air conditioner vent according to an embodiment of the present invention.
FIG. 4 is a schematic diagram of a mounting structure of a second blade group of an air conditioner vent according to an embodiment of the present invention.
FIG. 5 is a schematic diagram of a mounting structure of a gear shaft of an air conditioner vent according to an embodiment of the present invention.
FIG. 6 is a schematic structural diagram of a connection between a gear shaft and a second air guide blade of an air conditioner vent according to an embodiment of the present invention.
FIG. 7 is a schematic structural diagram of an annular toggle of an air conditioner vent according to an embodiment of the present invention.
FIG. 8 is a schematic structural diagram of a connection between a toggle and a first air guide blade of an air conditioner vent according to an embodiment of the present invention.
FIG. 9 is a schematic diagram of a motion trajectory of a first air guide blade when a toggle of an air conditioner vent according to an embodiment of the present invention, is shifted downwards.
FIG. 10 is a schematic structural diagram of an air conditioner vent according to an embodiment of the present invention, in an upward air-blowing state.
FIG. 11 is a structural cross-sectional view of a connection between a toggle and a second air guide blade of an air conditioner vent according to an embodiment of the present invention.
FIG. 12 is a schematic diagram of an air direction trajectory in a left air-blowing state of an air conditioner vent according to an embodiment of the present invention.
FIG. 13 is a structural cross-sectional view of a connection between a toggle and a second air guide blade in a left air-blowing state of an air conditioner vent according to an embodiment of the present invention.

Here, supplementary explanations for the drawings are described below. 10-housing; 101-first housing; 102-second housing; 111-connection rod; 112-gear shaft; 113-engagement groove; 20-first blade group; 201-first air guide blade; 202-connection rod; 203-first mounting post; 204-engagement rod; 30-second blade group; 301-second air guide blade; 40-toggle; 401-first connection portion; 402-second connection portion; 403-connection shaft.

### DETAILED DESCRIPTION

Reference herein to "an embodiment" or "embodiment" means that a particular feature, structure, or characteristic may be included in at least some implementations of the present invention. In the description of the present invention, it should be noted that, the orientation or position relationship indicated by terms such as "upper", "lower", "top", "bottom", etc., is based on the orientation or position relationship shown in the drawings, and is only for the convenience of describing the present invention and simplifying the description, rather than indicating or implying that the associated device or element must have a specific orientation, or be constructed and operated in a specific orientation, and therefore cannot be understood as a limitation to the present invention. In addition, the term "first" or "second" is only for descriptive purposes, rather than indicating or implying relative importance or implicitly indicating the number of indicated technical features. Therefore, the features associated with "first" or "second" can explicitly or implicitly include one or more of these features. Moreover, expressions such as "first" and "second" are used to distinguish similar objects, rather than to describe a specific sequence or order. It should be understood that these data can be interchanged with each other under appropriate circumstances, such that the described embodiments of the present invention can be implemented in a sequence other than those illustrated in the figures or described in the present description.

The purpose of an air conditioner vent is to distribute cold air of an air conditioner to every corner of a vehicle. In particular, an air vent in back seat of the vehicle mainly solves the problem of uneven temperature preferences of the vehicle's air conditioner among passengers in front and rear rows, which is helpful for all passengers to enjoy functionality of the air conditioner. In addition, when necessary, an air vent of a front-row air conditioner or an air vent of a rear-row air conditioner may even be solely closed to satisfy requirements of passengers with different physiques.

To satisfy comfort requirements in a passenger compartment of the vehicle in different usage scenarios, most blowing-face air conditioner vents of the current automobile have airflow direction adjustment functions. An air ventilation direction adjustment function of the air conditioner vent of the existing automobile is generally achieved by changing a guide blade arranged at the air conditioner vent, i.e., a direction of a blowing-face air vent is adjusted by shifting an inclination direction of the guide blade. In the prior art, a plurality of arrangements of an adjustment mechanism of the air conditioner vent occurs. However, most of the adjustment mechanisms adopt a plurality of parts to form a transmission structure to control the guide blades, resulting in a complex structure, a large number of parts, and high costs.

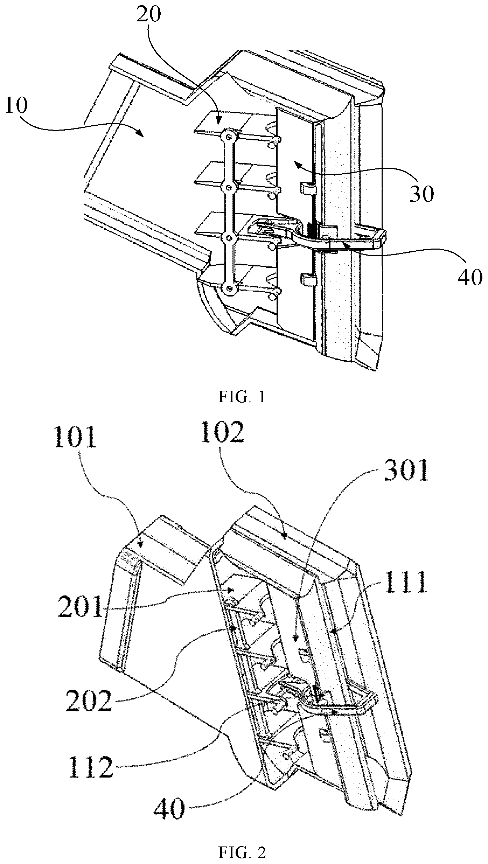

As illustrated in FIG. 1 and FIG. 2, an embodiment of the present invention provides an air conditioner vent, including a housing 10, a first blade group 20, a second blade group 30, and an air direction adjustment assembly. The first blade group 20 includes at least one first air guide blade 201. The at least one first air guide blade 201 has a first side edge and a second side edge that are opposite to each other. The first side edge and the second side edge are hinged to the housing 10, respectively. The second blade group 30 includes at least one second air guide blade 301. The at least one second air guide blade 301 has a first end and a second end that are opposite to each other. The first end and the second end are hinged to the housing 10, respectively. The air direction adjustment assembly includes a toggle 40. The toggle 40 includes a first connection portion 401 connected to a corresponding one of the at least one first air guide blade 201 and a second connection portion 402 connected to the at least one second air guide blade 301 through a gear mechanism.

The air conditioner vent described in the embodiments of the present invention has an overall structure mainly including parts such as the housing 10, the first blade group 20, the second blade group 30, and the air direction adjustment assembly. The first air guide blade 201 is directly connected to the second air guide blade 301 through the toggle 40, and the first blade group 20 and the second blade group 30 are driven by the rotation of the toggle 40, thereby realizing air direction adjustment. This structure, with a small number of parts, simple design, and low arrangement space requirements, greatly simplifies the structure of the air conditioner vent, resulting in development cost savings and a decreasing development cycle.

In an embodiment of the present invention, as illustrated in FIG. 1 and FIG. 2, the housing 10 is a support structure having an accommodation cavity and is configured to support the air guide blade and the air direction adjustment assembly. The housing 10 may be an integral structure or a structure formed by splicing a plurality of parts together. According to the present invention, as illustrated in FIG. 2, the housing 10 includes a first housing 101 and a second housing 102. The first housing 101 and the second housing 102 enclose together to define an accommodation cavity. The first blade group 20 and the second blade group 30 are disposed in the accommodation cavity. An end of the housing 10 may be an air vent. In order to satisfy user's sensory quality requirements for vehicle interior decoration and to make the appearance of the air conditioner vent aesthetically pleasing, the air vent of the housing 10 may be designed as a rectangular structure. Another end of the housing 10 may be fixedly connected to a vehicle body. Exemplarily, a connection between the housing 10 and the vehicle body may be achieved through any one of methods like clamping, bonding, screw connection, or rivet connection. The first blade group 20 and the second blade group 30 may be laminated to each other relative to the air vent. The second blade group 30 may be disposed close to the air vent, and may be disposed between the first blade group 20 and the air vent.

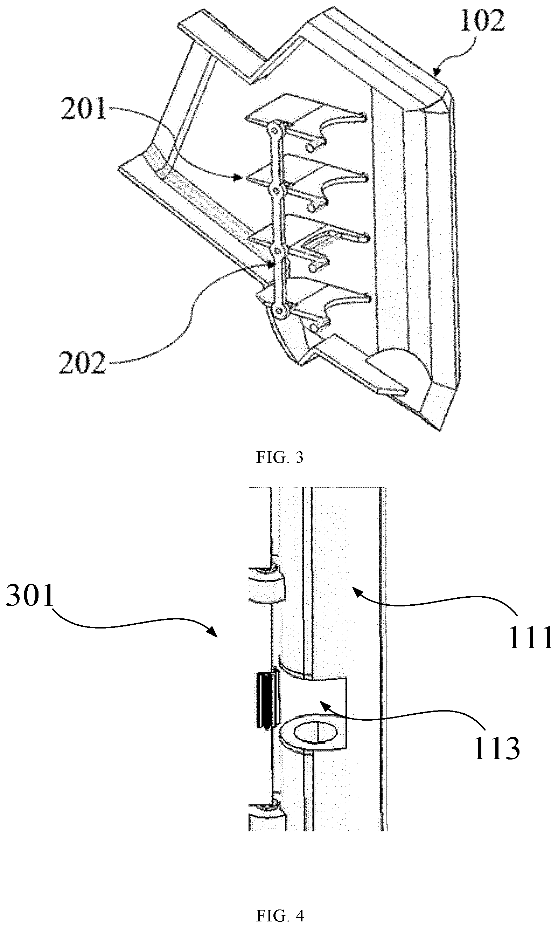

In an embodiment of the present invention, as illustrated in FIG. 3 and FIG. 4, the first blade group 20 and the second blade group 30 are configured to guide cold air or warm air blown out of the air vent. Moreover, adjustment on an air direction and discharge quantity of air is achieved by adjusting an angle of the air guide blade of the first blade group 20 and an angle of the air guide blade of the second blade group 30. The first blade group 20 and the second blade group 30 implement air direction adjustment in two directions, respectively. For example, as illustrated in FIG. 2, when the air conditioner vent is disposed in the vehicle body, the first blade group 20 is parallel to a floor of the vehicle body to achieve vertical air direction adjustment, and the second blade group 30 is perpendicular to the floor of the vehicle body to achieve transverse air direction adjustment. It should be understood that the above examples are merely illustrative of an air direction adjustment function of the first blade group 20 and an air direction adjustment function of the second blade group 30, rather than defining that the first blade group 20 may only be disposed parallel to the floor of the vehicle body, the second blade group 30 may only be disposed perpendicular to the floor of the vehicle body, and the first blade group 20 and the second blade group 30 are disposed in other manners based on different arrangement positions in the vehicle body. The first blade group 20 and the second blade group 30 are not necessarily disposed in a manner of being perpendicular to each other, or may be disposed in a cross manner at other angles. The first blade group 20 and the second blade group 30 implement swing control by means of the air direction adjustment assembly. According to the present invention, the air direction adjustment assembly includes a toggle 40 provided with a first connection portion 401 and a second connection portion 402 disposed thereon. A shift fork is disposed at the first connection portion 401. The shift fork is engaged on the corresponding first air guide blade 201. The second connection portion 402 is of an annular structure sleeved on the second air guide blade 301 and the connection rod 111.

In an embodiment of the present invention, the first blade group 20 may include one or more first air guide blades 201, which may be flexibly configured based on an arrangement space of the air conditioner vent exemplarily. Similarly, the second blade group 30 may include one or more second air guide blades 301. Taking the plurality of first air guide blades 201 and one second air guide blade 301 as an example, the arrangement of the first air guide blade 201 and the second air guide blade 301 will be described below. This example can be referred to for the arrangement of one first air guide blade 201 and the plurality of second air guide blades 301, and the arrangement of the plurality of first air guide blades 201 and the plurality of second air guide blades 301.

As an exemplary implementation, as illustrated in FIG. 3, the first blade group 20 includes the plurality of first air guide blades 201. For each of the plurality of first air guide blades 201, a first mounting post 203 is disposed at each of the first side edge and the second side edge of each of the plurality of first air guide blades 201. The two first mounting posts 203 are rotatably connected to the first housing 101 and the second housing 102, respectively. The plurality of first air guide blades 201 is sequentially arranged at intervals from top to bottom and is parallel to each other. In order to enable the plurality of first air guide blades 201 to integrally move under the driving of one toggle 40, a hinge post may be disposed at any one of side edges or two side edges of the plurality of first air guide blades 201. Moreover, these first air guide blades 201 are connected by providing a rigid connection rod 202 with a hinge hole. When the toggle 40 drives one of the first air guide blades 201 to swing up and down, all the first air guide blades 201 swing up and down together under the action of the rigid connection rod 202.

As an exemplary implementation, as illustrated in FIG. 4, the second blade group 30 includes one second air guide blade 301. A second mounting post is provided on each of a first end and a second end of the second air guide blade 301. The two second mounting posts are rotatably connected to the housing 10, respectively. Exemplarily, as illustrated in FIG. 3, since the first blade group 20 and the second blade group 30 are laminated to each other relative to the air vent, in order to make the whole air conditioner vent compact in structure and reduce an occupied space, avoidance structures is formed at an end portions of the plurality of first air guide blades 201 close to the at least one second air guide blade 301, to provide the second air guide blade 301 with a free swing space. In this implementation, the second air guide blade 301 is perpendicular to the first air guide blade 201, i.e., the first air guide blade 201 has two ends respectively connected to the first housing 101 disposed leftwards and the second housing 102 disposed rightwards, and the second air guide blade 301 has two ends respectively connected to upper and lower ends of the first housing 101 or the second housing 102. In some embodiments, an independent blade support may also be provided to connect and fix the second air guide blade 301. According to the present invention, the housing 10 further includes a blade support. The blade support includes a first transverse frame, a second transverse frame, and a connection rod 111. The connection rod 111 has two ends connected to the first transverse frame and the second transverse frame, respectively. The blade support may be disposed between the first housing 101 and the second housing 102. Alternatively, the first transverse frame and the second transverse frame may be engaged on an upper side surface and a lower side surface of the housing 10, respectively. The connection rod 111 may be disposed at the air vent of the housing 10. Exemplarily, the connection rod 111 is parallel to each of a left side edge and a right side edge of the air vent of the housing 10. The first end of the second air guide blade 301 is hinged to the first transverse frame, and the second end of the second air guide blade 301 is hinged to the second transverse frame.

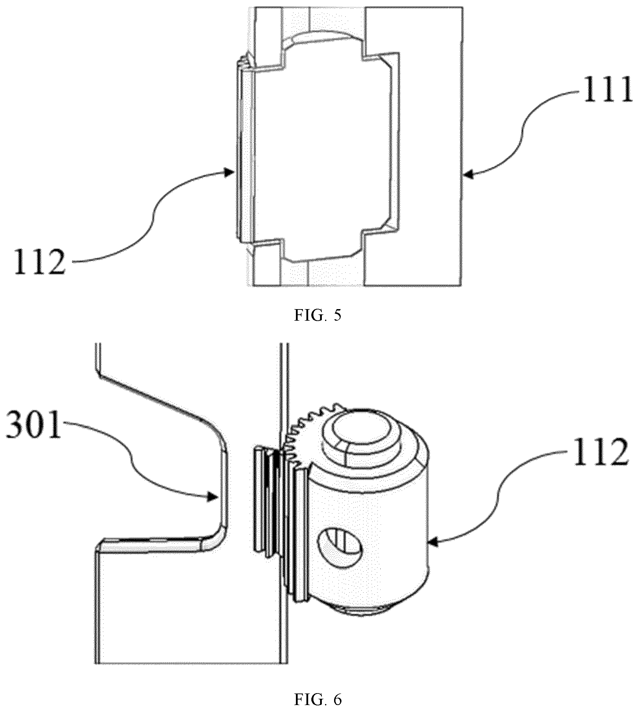

In an embodiment of the present invention, as illustrated in FIG. 4 and FIG. 5, the connection rod 111 has an engagement groove 113. The air direction adjustment assembly further includes a gear shaft 112 rotatably disposed in the engagement groove 113. Exemplarily, as illustrated in FIG. 5, an upper side surface and a lower side surface of the engagement groove 113 have shaft holes, and the gear shaft 112 has an upper end and a lower end which are disposed in the shaft holes. Exemplarily, the connection rod 111 has a hollow structure, the hollow structure of the connection rod 111 is exposed at an upper side surface and a lower side surface of the engagement groove 113, and an upper end and a lower end of the gear shaft 112 may be directly engaged in the hollow structure. In some embodiments, the connection rod 111 may not be provided with the gear shaft 112 instead of being provided with teeth, enabling the connection rod 111 to be in direct meshing connection with the second air guide blade 301 by means of the teeth. Meanwhile, the connection rod 111 has two ends directly hinged to the first transverse frame and the second transverse frame. Therefore, the connection rod 111 is rotatable.

In an embodiment of the present invention, as illustrated in FIG. 6, the teeth are provided on a side surface of the gear shaft 112 and provided on a side edge of the at least one second air guide blade 301 close to the connection rod 111. Teeth on the second air guide blade 301 are in meshing connection with teeth on the gear shaft 112. Exemplarily, the side surface of the gear shaft 112 may be completely covered with the teeth on the gear shaft 112. Exemplarily, the teeth on the gear shaft 112 may also be disposed at a part of a side surface of the gear shaft 112 in contact with the second air guide blade 301, for example, on a half side surface. The teeth on the gear shaft 112 determine a swingable range of the second air guide blade 301 and are preferably disposed at the half side surface of the gear shaft 112 in contact with the second air guide blade 301. The teeth are provided on the side edge of the at least one second air guide blade 301 close to the gear shaft 112. Exemplarily, the side edge of the second air guide blade 301 close to the gear shaft 112 may be directly configured to be meshed with the gear shaft 112. Exemplarily, a gear structure is provided on the side edge of the second air guide blade 301 close to the gear shaft 112, and may be integrally formed with the second air guide blade 301 or fixed on the second air guide blade 301 by means of bonding, welding, engaging, or the like.

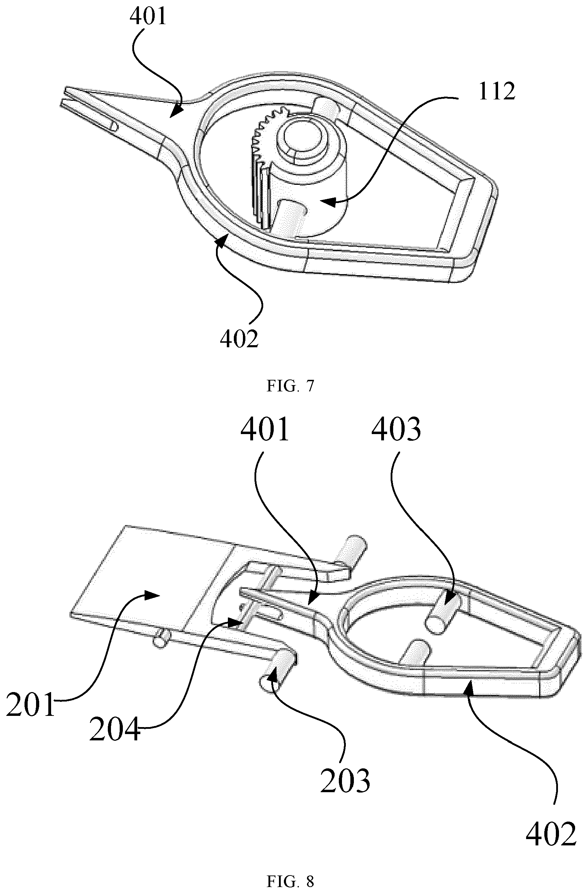

In an embodiment of the present invention, a group of the first air guide blade 201 and a group of the second air guide blade 301 implement swing control through one toggle 40. As illustrated in FIG. 7 and FIG. 8, in order to simplify a swing control structure and ensure reliability of the structure at the same time, the toggle 40 adopts an annular sheet-like structure. In some embodiments, a shape of an annular toggle 40 is similar to a pull ring of a pop can. As illustrated in FIG. 8, an outer side of an end of the annular toggle 40 is a first connection portion 401, and the first connection portion 401 is provided with a shift fork. Since the plurality of first air guide blades 201 is connected together by means of the rigid connection rod 202, the shift fork is connected to any one of the first air guide blades 201 to drive the entire group of first air guide blades 201 to move. The shift fork is engaged with the first air guide blade 201 through an engagement structure. As an example, the first air guide blade 201 connected to the shift fork is provided with an engagement rod 204. Moreover, the shift fork is of a clip-shaped structure, is engaged on the engagement rod 204, and may slide on the engagement rod 204 leftwards or rightwards. As illustrated in FIG. 1, an annular portion of the annular toggle 40 is a second connection portion 402, and is sleeved on the connection rod 111 of the blade support and the second air guide blade 301. As illustrated in FIG. 7, a connection shaft 403 is provided on an inner side wall of the annular portion and is hinged to a side surface of the gear shaft 112. In some embodiments, which do not belong to the present invention, the air conditioner vent may also not be provided with the blade support and the gear shaft 112, and the connection shaft 403 is directly hinged to the second air guide blade 301. As illustrated in FIG. 4, in order to enable the toggle 40 to freely rotate up and down around the connection shaft 403 and to make the entire air vent compact in structure, an avoidance structure is provided on a portion pass through the second air guide blade 301 of the annular portion and close to the first connection portion 401, and the avoidance structure provides freedom for a vertical swing of the toggle 40. The toggle 40 has an attractive appearance in the form of an annular structure, is easy to assemble, and has strong connection reliability.

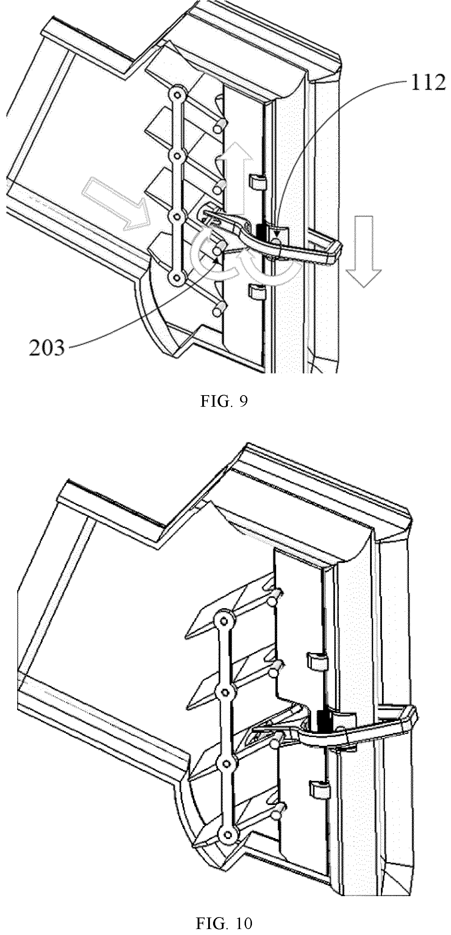

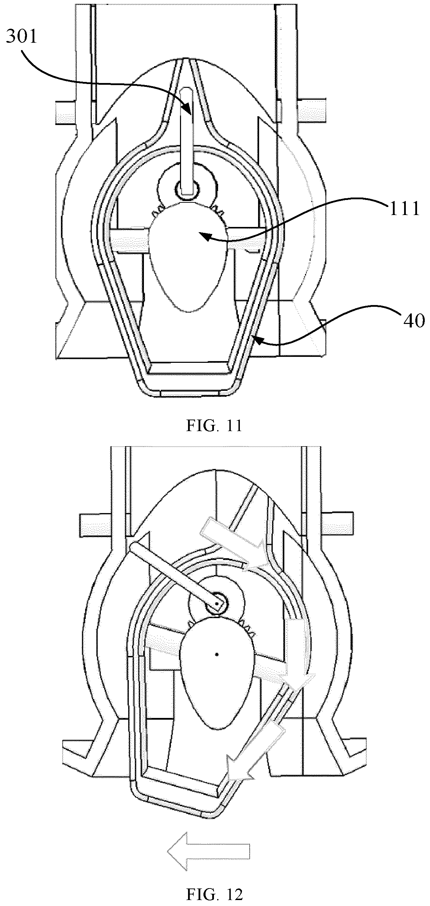

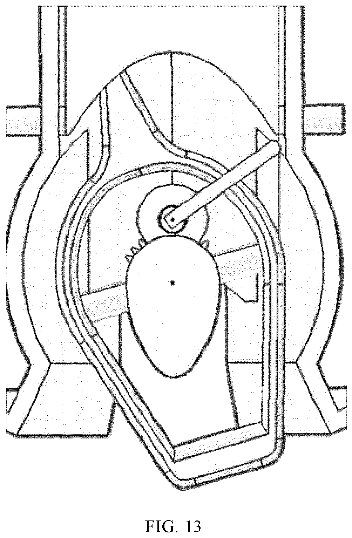

In an embodiment of the present invention, as illustrated in FIG. 9 and FIG. 10, when the user uses the toggle 40 to perform air direction adjustment, the annular toggle 40 is shifted up and down and rotates up and down along a connection shaft 403 of the toggle 40 mounted in the gear shaft 112, and a shift fork on the first connection portion 401 drives the first blade group 20 by shifting the engagement rod 204 of the first air guide blade 201. The first air guide blade 201 in the first blade group 20 rotates up and down along a first mounting post 203 of each two ends of the first air guide blade 201 mounted on the housing 10. As illustrated in FIG. 9, the toggle 40 is shifted downwards, the first blade group 20 rotates, and the air blows downwards along the first air guide blade 201. As illustrated in FIGS. 11 to 13, the annular toggle 40 is shifted leftwards or rightwards and drives the gear shaft 112 to rotate left and right through a connection shaft 403, and the teeth on the gear shaft 112 drives the second air guide blade 301 to rotate left and right. Moreover, a gear on the gear shaft 112 drives the second air guide blade 301 to rotate left and right. As illustrated in FIG. 12, the toggle 40 is shifted leftwards, the second blade rotates rightwards, and the air blows to the left along an upper layer blade and the housing 10.
With the air conditioner vent described in the embodiments of the present invention, as illustrated in FIG. 1 and FIG. 2, the housing 10 includes a first housing 101 and a second housing 102. The first housing 101 is enclosed together to form a structure with an open end. The first blade group 20, the second blade group 30, and the air direction adjustment assembly are wrapped in the housing 10. The first blade group 20 includes a plurality of air guide blades. The plurality of first air guide blades 201 has two ends that are respectively hinged to the first housing 101 and the second housing 102, is connected together through the connection rod 202, and may integrally swing up and down. The second blade group 30 includes one second air guide blade 301 having an upper end and a lower end that are hinged to the blade support. The gear shaft 112 is provided on the blade support. An incomplete gear is provided on the gear shaft 112. The gear is provided at the side edge of the second air guide blade 301 and engaged with the gear shaft 112. The annular toggle 40 is sleeved on the blade support. The connection shaft 403 is provided on an inner ring surface of the annular toggle 40 and is hinged to the gear shaft 112. The shift fork is provided at an end of the annular toggle 40 and is connected to one of the first air guide blades 201. The engagement rod 204 is provided on the first air guide blade 201, and the shift fork is engaged on the engagement rod 204. The second air guide blade 301 is provided with an avoidance notch, and an end of the annular toggle 40 and the shift fork are in the avoidance notch. The overall structure has a small quantity of parts, is simple in design, and has low demands for an arrangement space, which greatly simplifies the structure of the air conditioner vent, saves development costs and reduces a development cycle.

The embodiments of the present invention further provide an air conditioning system. The air conditioning system includes the air conditioner vent as described above.

In an embodiment of the present invention, the air conditioning system has the air conditioner vent. For a specific structure of the air conditioner vent, reference is made to all the modes in which the air conditioner vent is described above.

The embodiments of the present invention further provide a vehicle. The vehicle includes the air conditioning system as described above.

## Claims

1. An air conditioner vent, comprising:
a housing (10);
a first blade group (20) comprising at least one first air guide blade (201), the at least one first air guide blade (201) having a first side edge and a second side edge that are opposite to each other, the first side edge and the second side edge being hinged to the housing (10), respectively;
a second blade group (30) comprising at least one second air guide blade (301), the at least one second air guide blade (301) having a first end and a second end that are opposite to each other, the first end and the second end being hinged to the housing (10), respectively; and
an air direction adjustment assembly comprising a toggle (40), the toggle (40) including a first connection portion (401) connected to a corresponding one of the at least one first air guide blade (201) and a second connection portion (402) connected to the at least one second air guide blade (301) through a gear mechanism,
wherein the housing (10) comprises a first housing (101) and a second housing (102), the first housing (101) and the second housing (102) enclosing together to define an accommodation cavity, and the first blade group (20) and the second blade group (30) being disposed in the accommodation cavity,
wherein the housing (10) further comprises a blade support, the blade support comprising a first transverse frame, a second transverse frame, and a connection rod (111), the connection rod (111) having two ends connected to the first transverse frame and the second transverse frame, respectively; and the first end of the at least one second air guide blade (301) is hinged to the first transverse frame, and the second end of the at least one second air guide blade (301) is hinged to the second transverse frame,
**characterized in that**
a shift fork is disposed at the first connection portion (401), the shift fork being engaged on the corresponding first air guide blade (201),
and
the second connection portion (402) is of an annular structure, the annular structure being sleeved on the at least one second air guide blade (301) and the connection rod (111).

2. The air conditioner vent according to claim 1, wherein the first blade group (20) comprises a plurality of first air guide blades (201), the plurality of first air guide blades (201) being connected together through a connection rod (202) and integrally movable.

3. The air conditioner vent according to claim 1, wherein:
the connection rod (111) has an engagement groove (113); and
the air direction adjustment assembly further comprises a gear shaft (112) rotatably disposed in the engagement groove (113).

4. The air conditioner vent according to claim 3, wherein teeth are provided on a side edge of the at least one second air guide blade (301) close to the connection rod (111), the teeth being in meshing connection with the gear shaft (112).

5. The air conditioner vent according to claim 1, wherein a rotary shaft (403) is disposed at an inner side wall of the annular structure, the rotary shaft (403) being hinged to a gear shaft (112) of the air direction adjustment assembly.

6. The air conditioner vent according to claim 5, wherein an avoidance structure is formed at a part of the at least one second air guide blade (301) close to the first connection portion (401).

7. The air conditioner vent according to claim 1, wherein:
the housing (10) has an air vent;
the first blade group (20) and the second blade group (30) are laminated to each other relative to the air vent; and
the second blade group (30) is disposed between the first blade group (20) and the air vent.

8. The air conditioner vent according to claim 7, wherein the at least one second air guide blade (301) is perpendicular to the at least one first air guide blade (201),
optionally, an avoidance structure is formed at an end portion of the at least one first air guide blade (201) close to the at least one second air guide blade (301).

9. The air conditioner vent according to claim 1, wherein:
a first mounting post (203) is disposed at each of the first side edge and the second side edge of the at least one first air guide blade (201), the first mounting post (203) being hinged to the housing (10); and/or
a second mounting post is disposed at each of the first end and the second end of the at least one second air guide blade (301), the second mounting post being hinged to the housing (10).

10. An air conditioning system, **characterized by** comprising the air conditioner vent according to any one of claims 1 to 9.

11. A vehicle, **characterized by** comprising the air conditioning system according to claim

## Patentansprüche

1. Klimaanlagenlüftung, umfassend:
ein Gehäuse (10);
eine erste Schaufelgruppe (20), die mindestens eine erste Luftleitschaufel (201) umfasst, wobei die mindestens eine erste Luftleitschaufel (201) eine erste Seitenkante und eine zweite Seitenkante aufweist, die einander gegenüberliegen, wobei die erste Seitenkante und die zweite Seitenkante jeweils an dem Gehäuse (10) angelenkt sind;
eine zweite Schaufelgruppe (30), die mindestens eine zweite Luftleitschaufel (301) umfasst, wobei die mindestens eine zweite Luftleitschaufel (301) ein erstes Ende und ein zweites Ende aufweist, die einander gegenüberliegen, wobei das erste Ende und das zweite Ende jeweils an dem Gehäuse (10) angelenkt sind; und
eine Luftrichtungseinstellanordnung, die einen Kipphebel (40) umfasst, wobei der Kipphebel (40) einen ersten Verbindungsabschnitt (401), der mit einer entsprechenden der mindestens einen ersten Luftleitschaufel (201) verbunden ist, und einen zweiten Verbindungsabschnitt (402), der mit der mindestens einen zweiten Luftleitschaufel (301) über einen Getriebemechanismus verbunden ist, umfasst,
wobei das Gehäuse (10) ein erstes Gehäuse (101) und ein zweites Gehäuse (102) umfasst, wobei das erste Gehäuse (101) und das zweite Gehäuse (102) einander umgeben, um einen Aufnahmehohlraum zu definieren, und die erste Schaufelgruppe (20) und die zweite Schaufelgruppe (30) in dem Aufnahmehohlraum angeordnet sind,
wobei das Gehäuse (10) ferner eine Schaufelhalterung umfasst, wobei die Schaufelhalterung einen ersten Querrahmen, einen zweiten Querrahmen und eine Verbindungsstange (111) umfasst, wobei die Verbindungsstange (111) zwei Enden aufweist, die jeweils mit dem ersten Querrahmen und dem zweiten Querrahmen verbunden sind; und das erste Ende der mindestens einen zweiten Luftleitschaufel (301) an dem ersten Querrahmen angelenkt ist, und das zweite Ende der mindestens einen zweiten Luftleitschaufel (301) an dem zweiten Querrahmen angelenkt ist,
**dadurch gekennzeichnet, dass** eine Schaltgabel an dem ersten Verbindungsabschnitt (401) angeordnet ist, wobei die Schaltgabel mit der entsprechenden ersten Luftleitschaufel (201) in Eingriff steht, und der zweite Verbindungsabschnitt (402) von einer ringförmigen Struktur ist, wobei die ringförmige Struktur an der mindestens einen zweiten Luftleitschaufel (301) und der Verbindungsstange (111) ummantelt ist.

2. Klimaanlagenlüftung nach Anspruch 1, wobei die erste Schaufelgruppe (20) eine Vielzahl von ersten Luftleitschaufeln (201) umfasst, wobei die Vielzahl von ersten Luftleitschaufeln (201) durch eine Verbindungsstange (202) miteinander verbunden und integral beweglich ist.

3. Klimaanlagenlüftung nach Anspruch 1, wobei
die Verbindungsstange (111) eine Eingriffsnut (113) aufweist; und
die Luftrichtungseinstellanordnung ferner eine Getriebewelle (112) umfasst, die drehbar in der Eingriffsnut (113) angeordnet ist.

4. Klimaanlagenlüftung nach Anspruch 3, wobei an einer Seitenkante der mindestens einen zweiten Luftleitschaufel (301) nahe der Verbindungsstange (111) Zähne vorgesehen sind, wobei die Zähne mit der Getriebewelle (112) in Eingriffverbindung stehen.

5. Klimaanlagenlüftung nach Anspruch 1, wobei eine Drehwelle (403) an einer inneren Seitenwand der ringförmigen Struktur angeordnet ist, wobei die Drehwelle (403) an einer Getriebewelle (112) der Luftrichtungseinstellanordnung angelenkt ist.

6. Klimaanlagenlüftung nach Anspruch 5, wobei eine Vermeidungsstruktur an einem Teil der mindestens einen zweiten Luftleitschaufel (301) nahe dem ersten Verbindungsabschnitt (401) ausgebildet ist.

7. Klimaanlagenlüftung nach Anspruch 1, wobei
das Gehäuse (10) eine Entlüftung aufweist;
die erste Schaufelgruppe (20) und die zweite Schaufelgruppe (30) in Bezug auf die Entlüftung aneinander geschichtet sind; und
die zweite Schaufelgruppe (30) zwischen der ersten Schaufelgruppe (20) und der Entlüftung angeordnet ist.

8. Klimaanlagenlüftung nach Anspruch 7, wobei die mindestens eine zweite Luftleitschaufel (301) senkrecht zu der mindestens einen ersten Luftleitschaufel (201) steht,
optional eine Vermeidungsstruktur an einem Endabschnitt der mindestens einen ersten Luftleitschaufel (201) nahe der mindestens einen zweiten Luftleitschaufel (301) ausgebildet ist.

9. Klimaanlagenlüftung nach Anspruch 1, wobei
ein erster Befestigungspfosten (203) jeweils an der ersten Seitenkante und der zweiten Seitenkante der mindestens einen ersten Luftleitschaufel (201) angeordnet ist, wobei der erste Befestigungspfosten (203) an dem Gehäuse (10) angelenkt ist; und/oder
ein zweiter Befestigungspfosten jeweils am ersten Ende und am zweiten Ende der mindestens einen zweiten Luftleitschaufel (301) angeordnet ist, wobei der zweite Befestigungspfosten an dem Gehäuse (10) angelenkt ist.

10. Klimaanlagensystem, **dadurch gekennzeichnet, dass** es die Klimaanlagenlüftung nach einem der Ansprüche 1 bis 9 umfasst.

11. Fahrzeug, **dadurch gekennzeichnet, dass** es das Klimaanlagensystem nach Anspruch 10 umfasst.

## Revendications

1. Une bouche d'aération de climatiseur, comprenant :
un boîtier (10) ;
un premier groupe de lames (20) comprenant au moins une première lame de guidage d'air (201), ladite au moins une première lame de guidage d'air (201) ayant un premier bord latéral et un deuxième bord latéral opposés l'un à l'autre, le premier bord latéral et le deuxième bord latéral étant respectivement articulés au boîtier (10) ;
un deuxième groupe de lames (30) comprenant au moins une deuxième lame de guidage d'air (301), ladite au moins une deuxième lame de guidage d'air (301) ayant une première extrémité et une deuxième extrémité opposées l'une à l'autre, la première extrémité et la deuxième extrémité étant respectivement articulées au boîtier (10) ; et
un ensemble de réglage de la direction de l'air comprenant un levier de commutation (40), le levier de commutation (40) comprenant une première partie de connexion (401) reliée à l'une correspondante de ladite au moins une première lame de guidage d'air (201) et une deuxième partie de connexion (402) reliée à ladite au moins une deuxième lame de guidage d'air (301) par l'intermédiaire d'un mécanisme à engrenages,
dans lequel le boîtier (10) comprend un premier boîtier (101) et un deuxième boîtier (102), le premier boîtier (101) et le deuxième boîtier (102) s'enfermant ensemble pour définir une cavité de logement, et le premier groupe de lames (20) et le deuxième groupe de lames (30) étant disposés dans la cavité de logement,
dans lequel le boîtier (10) comprend en outre un support de lames, le support de lames comprenant un premier cadre transversal, un deuxième cadre transversal et une tige de connexion (111), la tige de connexion (111) ayant deux extrémités reliées respectivement au premier cadre transversal et au deuxième cadre transversal ; et la première extrémité de ladite au moins une deuxième lame de guidage d'air (301) est articulée au premier cadre transversal, et la deuxième extrémité de ladite au moins une deuxième lame de guidage d'air (301) est articulée au deuxième cadre transversal,
**caractérisée en ce qu'**une fourchette de débrayage est disposée à la première partie de connexion (401), la fourchette de débrayage étant en prise sur la première lame de guidage d'air (201) correspondante,
et **en ce que** la deuxième partie de connexion (402) est d'une structure annulaire, la structure annulaire étant emmanchée sur ladite au moins une deuxième lame de guidage d'air (301) et la tige de connexion (111).

2. La bouche d'aération de climatiseur selon la revendication 1, dans laquelle le premier groupe de lames (20) comprend une pluralité de premières lames de guidage d'air (201), la pluralité de premières lames de guidage d'air (201) étant reliées ensemble par une tige de connexion (202) et mobiles de manière intégrée.

3. La bouche d'aération de climatiseur selon la revendication 1, dans laquelle :
la tige de connexion (111) a une rainure d'engagement (113) ; et
l'ensemble de réglage de la direction de l'air comprend en outre un arbre à engrenage (112) disposé de manière rotative dans la rainure d'engagement (113).

4. La bouche d'aération de climatiseur selon la revendication 3, dans laquelle des dents sont prévues sur un bord latéral de ladite au moins une deuxième lame de guidage d'air (301) proche de la tige de connexion (111), les dents étant en liaison d'engrènement avec l'arbre à engrenage (112).

5. La bouche d'aération de climatiseur selon la revendication 1, dans laquelle un arbre de rotation (403) est disposé sur une paroi latérale interne de la structure annulaire, l'arbre rotatif (403) étant articulé à un arbre à engrenage (112) de l'ensemble de réglage de la direction de l'air.

6. La bouche d'aération de climatiseur selon la revendication 5, dans laquelle une structure d'évitement est formée à une partie de ladite au moins une deuxième lame de guidage d'air (301) proche de la première partie de connexion (401).

7. La bouche d'aération de climatiseur selon la revendication 1, dans laquelle :
le boîtier (10) a une bouche d'aération ;
le premier groupe de lames (20) et le deuxième groupe de lames (30) sont superposés l'un à l'autre par rapport à la bouche d'aération ; et
le deuxième groupe de lames (30) est disposé entre le premier groupe de lames (20) et la bouche d'aération.

8. La bouche d'aération de climatiseur selon la revendication 7, dans laquelle ladite au moins une deuxième lame de guidage d'air (301) est perpendiculaire à ladite au moins une première lame de guidage d'air (201),
éventuellement, une structure d'évitement est formée à une extrémité de ladite au moins une première lame de guidage d'air (201) proche de ladite au moins une deuxième lame de guidage d'air (301).

9. La bouche d'aération de climatiseur selon la revendication 1, dans laquelle :
un premier pion de montage (203) est disposé à chacun du premier bord latéral et du deuxième bord latéral de ladite au moins une première lame de guidage d'air (201), le premier pion de montage (203) étant articulé au boîtier (10) ; et/ou
un deuxième pion de montage est disposé à chacune de la première extrémité et de la deuxième extrémité de ladite au moins une deuxième lame de guidage d'air (301), le deuxième pion de montage étant articulé au boîtier (10).

10. Un système de climatisation, **caractérisé en ce qu'**il comprend la bouche d'aération de climatiseur selon l'une quelconque des revendications 1 à 9.

11. Un véhicule, **caractérisé en ce qu'**il comprend le système de climatisation selon la revendication 10.
